# FASCICULE DE BREVET EUROPEEN

(11) **EP 0 836 386 B1**
(45) Date de publication et mention de la délivrance du brevet: **16.08.2001**
(21) Numéro de dépôt: 96924021.7
(22) Date de dépôt: 26.06.1996
(51) Int. Cl.: A01N 47/02, A01N 43/56

(54) **PROCEDE DE LUTTE CONTRE LES INSECTES AVEC DES 1-PHENYLPYRAZOLES OU DES 1-HETEROARYLPYRAZOLES**
VERFAHREN ZUR INSEKTENBEKÄMPFUNG MIT 1-PHENYLPYRAZOLEN ODER 1-HETEROARYLPYRAZOLEN
INSECT CONTROL METHOD USING 1-PHENYLPYRAZOLES OR 1-HETEROARYLPYRAZOLES

(30) Priorité: 29.06.1995 FR 9508073
(43) Date de publication de la demande: 22.04.1998
(73) Titulaire: AVENTIS CROPSCIENCE S.A., 69009 Lyon (FR)
(72) Inventeur: GAUTIER, Martine, F-69760 Limonest (FR); DEROIS, Jean, F-69450 Saint-Cyr-au-Mont-d'Or (FR)
(86) Numéro de dépôt international: FR9600993
(87) Numéro de publication internationale: WO9701278

(56) Documents cités:
- EP-A- 0 084 310
- EP-A- 0 190 844
- EP-A- 0 212 226
- EP-A- 0 254 257
- EP-A- 0 295 117
- EP-A- 0 430 634
- EP-A- 0 500 209
- WO-A-92/14363
- WO-A-95/22902
- FR-A- 2 713 889
- DATABASE WPI Week 8627 Derwent Publications Ltd., London, GB; AN 86-173308 [27] XP002014580 & JP,A,61 106 505 (EARTH SEIYAKU) , 24 Mai 1986

## Description

La présente invention a pour objet de nouvelles compositions destinées à la lutte contre les insectes, et un procédé de lutte mettant en oeuvre lesdites compositions.

On connaît, notamment par les demandes de brevet EP 295117, WO 87/3781, 93/6089, 94/21606 des composés insecticides de type phényl-pyrazole utilisables dans la lutte contre les insectes. EP 295117 mentionne également des compositions sous forme d'appâts comestibles comprenant de 0,01% à 5% de telles matières actives.

Il est souvent souhaitable de disposer de tels appâts dans des zones où sont susceptibles de circuler les insectes indésirables, qu'il s'agisse notamment de fourmis, de blattes, de guêpes, de termites, tout particulièrement des insectes qui se déplacent en groupe ou en colonnes comme les fourmis. Les zones concernées peuvent notamment comprendre des locaux d'habitation ou bien des zones extérieures à ces locaux telles que des terrasses ou des jardins d'agrément ou des voies de passage.

Quand on souhaite appliquer les compositions sous forme d'appâts fluides, il est commode de répartir ces appâts sous forme de gouttes, et il est désirable que ces gouttes demeurent présentes.

Plus particulièrement, dans le cas où l'on souhaite appliquer ces compositions sous forme de gouttes, il est désirable que lesdites gouttes demeurent présentes durant une période de temps la plus longue possible pour que les insectes puissent être effectivement au contact de ces compositions, et puissent le plus possible les ingérer. On entend par goutte au sens de la présente invention un volume de forme arrondie compris entre 0,01 et 1 ml, de préférence entre 0,01 et 0,1 ml, dont la hauteur pour une goutte isolée sur une surface plane est supérieure à 1 mm, de préférence supérieure à 3 mm.

Une telle application pose alors un certain nombre de difficultés.

Il est ainsi nécessaire que ces gouttes disparaissent le plus lentement possible, notamment par étalement ou par évaporation.

En raison de la nature diverse des supports sur lesquels peuvent être déposées ces gouttes, il est également nécessaire que celles-ci ne soient pas trop rapidement absorbées, par exemple dans le cas de supports poreux.

Il est également souhaitable que, dans le cas d'applications multiples à partir d'un récipient unique de stockage, la composition insecticide conserve ses performances malgré les ouvertures et fermetures répétées de l'emballage.

Un but de l'invention est de remédier, en tout ou en partie, à ces difficultés.

Un autre but de l'invention est de proposer des compositions avantageuses pour application par dépôt de gouttes.

Un autre but de l'invention est de fournir des compositions comprenant au moins une matière active insecticide de type phényl-pyrazole et applicable sous forme de gouttes, notamment dans des conditions favorisant l'évaporation ou l'absorption des liquides.

Un autre but de l'invention est de fournir des compositions attractives et nourrissantes pour les insectes, spécialement pour les insectes grégaires et/ou vivant en société tels que les fourmis, et comprenant au moins une matière active insecticide de type phényl-pyrazole.

Un autre but de l'invention est de proposer des compositions insecticides conservant leurs performances lors d'usages répétés, notamment lors d'ouvertures fréquentes des emballages les contenant.

Il a maintenant été trouvé que ces buts pouvaient être atteints, en totalité ou en partie, au moyen des compositions et du procédé de lutte selon l'invention qui sont décrits en détail ci-après. On précise que les pourcentages indiqués dans le présent texte sont des pourcentages poids/poids, sauf indication contraire spécifique.

La présente invention a donc pour objet, en premier lieu, des compositions insecticides comprenant :
- a) entre 0,001 et 5 %, de préférence entre 0,05 et 0,5 % d'un composé de formule (I): 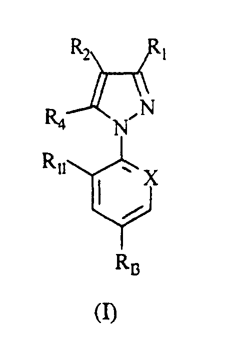 dans laquelle :
   R₁ est un atome d'halogène ou un groupe CN ou méthyle ;
   R₂ est S(O)ₙR₃;
   R₃ est alkyl ou haloalkyl;
   R₄ représente un atome d'hydrogène ou d'halogène; ou un radical NR₅R₆, S(O)ₘR₇, C(O)R₇ or C(O)O-R₇, alkyl, haloalkyl ou OR₈ ou un radical N=C(R₉)(R₁₀);
   R₅ et R₆ représentent indépendamment l'atome d'hydrogène ou un radical alkyl, haloalkyl, C(O)alkyl, S(O)ᵣCF₃; ou R₅ et R₆ peuvent former ensemble un radical alkylene divalent qui peut être interrompu par un ou deux hétéroatomes divalents, tels que l'oxygène ou le soufre;
   R₇ représente un radical alkyl ou haloalkyl;
   R₈ représente un radical alkyl, haloalkyl ou un atome d'hydrogène;
   R₉ représente un radical alkyl ou un atome d'hydrogène;
   R₁₀ représente un groupe phenyl ou heteroaryl éventuellement substitué par un ou plusieurs atomes d'halogène ou groupes tels que OH, -O-alkyl, -S-alkyl, cyano, ou alkyl;
   R₁₁ et R₁₂ représentent, indépendamment l'un de l'autre, un atome d'hydrogène ou d'halogène;
   R₁₃ représente un atome d'halogène ou un groupe haloalkyl, haloalkoxy, S(O)_{q}CF₃ ou SF₅;
   m,n,q,r représentent, indépendamment l'un de l'autre, un nombre entier égal à 0,1 ou 2;
   X représente un atome d'azote trivalent ou un radical C-R₁₂, les trois autres valences de l'atome de carbone faisant partie du cycle aromatique;
   sous réserve que. lorsque R₁ est méthyle, alors R₃ est haloalkyl, R₄ est NH₂, R₁₁ est C1, R₁₃ est CF₃, et X est N ;
- b) entre 0,05 et 10%, de préférence entre 0,1 et 5 % d'un agent épaississant ; et
- c) entre 5 et 50 %, de préférence entre 10 et 40 % de propylène glycol, le composé de formule (I) étant à l'état dissous dans la dite composition.

Les radicaux alkyle de la définition de la formule (I) comprennent généralement de 1 à 6 atomes de carbone. Le cycle formé par le radical alkylène divalent représentant R₅ et R₆ ainsi que par l'atome d'azote auxquels R₅ et R₆ sont rattachés, est généralement un cycle à 5, 6 ou 7 chaînons.

Dans le cas où les compositions selon l'invention sont appliquées sous forme de gouttes déposées dans un lieu où les insectes, de préférence les fourmis, sont susceptibles de passer, notamment un lieu constitué par un support absorbant, les compositions selon l'invention sont particulièrement avantageuses en raison de leur étalement rallenti.

Plus précisément, la hauteur d'une goutte desdites compositions au-dessus d'une surface plane sur laquelle elle est déposée reste avantageusement supérieure à 1 mm, de préférence à 3 mm au bout d'une durée supérieure à 1 jour, de préférence supérieure à 2 jours, à température ambiante.

De plus, ces compositions présentent une conservation améliorée dans le cas où leur emballage commercial est fréquemment ouvert et refermé par l'utilisateur.

Les compositions selon l'invention sont relativement visqueuses, et malgré celà, la matière active est répartie uniformément dans la composition, grâce à la nature de celle-ci.

Le composé de formule (I) peut être préparé selon un des procédés décrits dans les demandes de brevet WO 87/3781, 93/6089, 94/21606, EP 295117 ou encore par un autre procédé compris dans les connaissances générales de l'homme du métier compétent en synthèse chimique. Ce composé est également désigné dans le présent texte par le terme de matière active.

Parmi les agents épaississants, on peut utiliser notamment un hétéropolysaccharide, un sel de polyacrylate, notamment le sel d'ammonium, un copolymère de vinylpyrrolidone et d'acétate de vinyle, un polyglycol, tel que le polyéthylène glycol, de l'amidon ou encore de la gomme arabique.

Selon une variante préférée de la composition selon l'invention, la composition comprend également de 30 à 70 %, de préférence de 40 à 60% de sucres. Cette variante de composition possède une appétence pour les fourmis améliorée de façon notable. Les sucres sont choisis notamment parmi les mono, oligo ou polyorganosaccharides, spécialement parmi le saccharose, le lactose, le fructose, le dextrose, le glucose ou encore la mélasse ou le miel.

Une classe préférée de composés de formule (I) comprend les composés tels que R₁ est CN, et/ou R₃ est haloalkyl, et/ou R₄ est NH₂, et/ou R₁₁ et R₁₂ sont indépendamment l'un de l'autre un atome d'halogène, et/ou R₁₃ est haloalkyl.

Selon une variante particulièrement avantageuse de l'invention, le composé de formule (I) mis en oeuvre dans l'invention est le 5-amino-3-cyano-1-[2,6-dichloro-4-(trifluoromethyl)phenyl]-4-[(trifluoromethyl)sulfinyl]-1*H*-pyrazole, auquel il est fait référence dans les exemples sous le terme de "fipronil".

Les compositions objet de l'invention peuvent également comprendre un agent conservateur prévenant la dégradation du sucre et/ ou de l'agent épaississant, tel que le benzoate de sodium, la 1,2-benzisothiazoline-3-one, l'acide benzoïque, l'acide para hydroxybenzoïque et ses dérivés esters et sels alcalins ou alcalino-terreux, notamment le sel de sodium, le 2-phénylphénol et ses sels alcalins ou alcalino-terreux, notamment le sel de sodium.

D'autres additifs peuvent également être inclus tels qu'un agent colorant ou un agent attractif choisi notamment parmi un arôme d'origine animale ou végétale ou le glutamate de sodium.

La nature et la dose des ingrédients des compositions selon l'invention sont avantageusement choisis de manière à ce qu'elles présentent une viscosité comprise entre 30 et 10000 cP, de préférence entre 60 et 1000 cP, à température ambiante. On désigne par l'abréviation cP l'unité de viscosité égale à la centipoise, encore égale à un milli.pascal.seconde (m.Pa.s).

Les compositions selon l'invention peuvent être préparées par simple mélange des divers constituants, de préférence sous agitation et à chaud.

Un mélange plus rapide et plus efficace peut être avantageusement obtenu en préparant dans une première étape, un prémélange en solubilisant pour celà la matière active dans le propylène glycol à température ambiante, éventuellement sous agitation, de manière à obtenir une solution de concentration sensiblement égale à 1%. Ensuite, dans une deuxième étape, on met d'abord en solution dans l'eau éventuellement le sucre avec si nécessaire l'agent conservateur, puis on rajoute l'agent épaississant qui est solubilisé éventuellement sous agitation et en chauffant à une température comprise entre 20 et 70 °C. Dans une troisième étape, on incorpore le prémélange de matière active dans la solution aqueuse préparée précédemment.

L'invention concerne également un procédé de lutte contre les insectes, caractérisé en ce que l'on applique sur une zone où ils sont susceptibles de se trouver une quantité efficace d'une des compositions selon l'invention.

Par quantité efficace, on entend une quantité de composition correspondant à une dose de composé de formule (I) égale à la dose nécessaire à la destruction d'au moins 90 % des insectes considérés à laquelle est appliquée ladite composition, en un temps compris entre 2 et 15 jours, de préférence entre 2 et 4 jours.

On préfère mettre en oeuvre le procédé selon l'invention pour lutter contre les fourmis.

Dans ce cas, la quantité efficace de composition selon l'invention correspond à une dose de composé de formule (I) comprise entre 5 mg et 5 g pour 100 m², de préférence entre 10 mg et 2 g pour 100 m².

La zone peut notamment se trouver dans un local public ou privé, tel qu'un local d'habitation.

Pour la mise en oeuvre du procédé selon l'invention, la composition, également selon l'invention, est appliquée sur la zone où sont susceptibles de se trouver les insectes, sous forme de gouttes. Dans ce cas ladite composition est avantageusement conditionnée dans un tube prêt à l'emploi, que l'utilisateur presse pour obtenir les gouttes nécessaires.

Selon une autre variante du procédé selon l'invention, la composition est placée à l'intérieur d'une boîte porte-appât close et comportant des ouvertures, adaptées en raison de leur taille à l'usage exclusif des fourmis ou, éventuellement d'insectes de taille similaire . Cette variante du procédé selon l'invention présente une sécurité améliorée, s'agissant d'une matière active susceptible de présenter un risque en cas de contact ou d'ingestion accidentelle par des animaux domestiques ou des enfants.

Les exemples suivants illustrent l'invention, sans pour autant constituer une limitation de celle-ci. Dans ces exemples, le composé de formule (I) utilisé est le fipronil.

### Exemple 1 :

On prépare par simple dissolution à température ambiante 100 g d'une solution à 1% de fipronil dans le propylène glycol, dite "prémélange de fipronil".

On prépare également par simple mélange une dispersion/solution aqueuse d'hétéropolysaccharide à 2% renfermant également 1% de benzoate de sodium que l'on désigne par le terme de "prémélange d'agent épaississant".

On prépare alors 1000 g de composition à 0,05 % de fipronil par simple mélange des ingrédients suivants utilisés dans les proportions indiquées:

| | |
|---|---|
| prémélange de fipronil | 5 % |
| prémélange d'agent épaississant | 50 % |
| propylène glycol | 34,9 % |
| colorant bleu | 0,1 % |
| eau | 10% |

Cette composition a une viscosité de 450 cP.

On dépose dans une boîte de Pétri, en pressant un tube contenant la composition préparée ci-dessus, une goutte de cette composition. Cette goutte a sensiblement la forme d'une demi-sphère de diamètre 6 mm et de hauteur 4 mm. Au bout de 2 jours la hauteur de la goutte est de l'ordre de 4 mm.

Un récipient carré de 30 cm de côté est placé dans une pièce à température ambiante. On place au fond de ce récipient une couche de terre de 5 mm d'épaisseur et l'on introduit un tube à essai obscurci sur une partie de sa longueur, destiné à servir de refuge aux fourmis et contenant un coton imbibé d'eau. On dispose également dans ce récipient un abreuvoir contenant de l'eau sucrée comme source de nourriture pour les fourmis.

On introduit dans ce récipient 100 fourmis (*Lasius niger*) et on les laisse s'acclimater 1 semaine.

On introduit ensuite une boîte de Pétri dans laquelle ont été déposées 4 gouttes de la composition préparée ci-dessus et on retire l'abreuvoir. Les gouttes ont été déposées en pressant le tube contenant ladite composition et ont sensiblement la forme d'une demi-sphère de diamètre 6 mm et de hauteur 4 mm.

On procède à l'obervation des résultats au bout de 4 jours. On observe un taux de mortalité supérieur à 95 %.

### Exemple 2 :

On répète l'exemple 1 en utilisant les proportions d'ingrédients suivantes :

| | |
|---|---|
| prémélange de fipronil | 10 % |
| prémélange d'agent épaississant | 50 % |
| propylène glycol | 29,9 % |
| colorant bleu | 0,1 % |
| eau | 10% |

Cette composition a une viscosité de 400 cP.

On obtient les mêmes résultats.

### Exemple 3 :

On répète l'exemple 1 en préparant 1000 g de composition à 0,05 % de fipronil par simple mélange des ingrédients suivants utilisés dans les proportions indiquées :

| | |
|---|---|
| prémélange de fipronil | 5 % |
| prémélange d'agent épaississant | 7 % |
| propylène glycol | 5 % |
| saccharose | 50 % |
| colorant bleu | 0,1 % |
| eau | 32,9 % |

Cette composition a une viscosité de 300 cP.

On dépose dans une boîte de Pétri, en pressant un tube contenant la composition préparée ci-dessus, une goutte de cette composition. Cette goutte a sensiblement la forme d'une demi-sphère de diamètre 1 cm et de hauteur 2 mm. Au bout de 2 jours la hauteur de la goutte est de l'ordre de 2 mm.

Quant à l'essai d'application sur fourmis, on répète l'essai de l'exemple 1. On obtient le même résultat.

### Exemple 4 :

On prépare 1000 g de composition à 0,05 % de fipronil en procédant comme à l'exemple 1.

On dépose une goutte de cette composition, ayant sensiblement la forme d'une demi-sphère de diamètre 6 mm et de hauteur 4 mm, sur une dalle horizontale utilisée pour un revêtement de terrasse, d'aspect granuleux et poreux.

Au bout de 2 jours, la hauteur de la goutte est de l'ordre de 2 mm.

On dispose au fond du récipient carré de l'exemple 1 à la place de la couche de terre un carreau de même taille que ce récipient, découpé dans le même matériau que la dalle précédente et l'on procéde comme à l'exemple 1, en déposant les 4 gouttes de composition directement sur ce carreau.

Au bout de 4 jours, on observe un taux de mortalité des fourmis également supérieur à 95 %.

### Exemple 5 :

On répète l'exemple 4 en déposant tout d'abord la goutte de composition sur une couche de terre plane.

Au bout de 2 jours, la hauteur de la goutte est de l'ordre de 1 mm.

On procéde ensuite à l'essai avec les fourmis comme à l'exemple 1, mais en déposant les 4 gouttes de composition directement sur la terre.

Au bout de 4 jours, on observe un taux de mortalité également supérieur à 95 %.

## Revendications

1. Compositions insecticides comprenant :
- a) entre 0,001 et 5 %, de préférence entre 0,05 et 0,5 % d'un composé de formule (I): 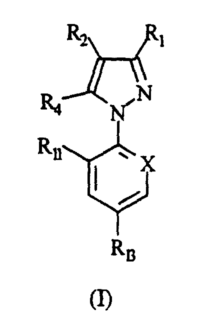 dans laquelle :
R₁ est un atome d'halogène ou un groupe CN ou méthyle ;
R₂ est S(O)ₙR₃;
R₃ est alkyl ou haloalkyl;
R₄ représente un atome d'hydrogène ou d'halogène; ou un radical NR₅R₆, S(O)ₘR₇, C(O)R₇ or C(O)O-R₇, alkyl, haloalkyl ou OR₈ ou un radical - N=C(R₉)(R₁₀);
R₅ et R₆ représentent indépendamment l'atome d'hydrogène ou un radical alkyl, haloalkyl, C(O)alkyl, S(O)ᵣCF₃; ou R₅ et R₆ peuvent former ensemble un radical alkylene divalent qui peut être interrompu par un ou deux hétéroatomes divalents, tels que l'oxygène ou le soufre;
R₇ représente un radical alkyl ou haloalkyl;
R₈ représente un radical alkyl, haloalkyl ou un atome d'hydrogène;
R₉ représente un radical alkyl ou un atome d'hydrogène;
R₁₀ représente un groupe phenyl ou heteroaryl éventuellement substitué par un ou plusieurs atomes d'halogène ou groupes tels que OH, -O-alkyl, -S-alkyl, cyano, ou alkyl;
R₁₁ et R₁₂ représentent, indépendamment l'un de l'autre, un atome d'hydrogène ou d'halogène;
R₁₃ représente un atome d'halogène ou un groupe haloalkyl, haloalkoxy, S(O)_{q}CF₃ ou SF₅;
m,n,q,r représentent, indépendamment l'un de l'autre, un nombre entier égal à 0,1 ou 2;
X représente un atome d'azote trivalent ou un radical C-R₁₂, les trois autres valences de l'atome de carbone faisant partie du cycle aromatique;
sous réserve que, lorsque R₁ est méthyle, alors R₃ est haloalkyl, R₄ est NH₂, R₁₁ est C1, R₁₃ est CF₃, et X est N ;
- b) entre 0,05 et 10%, de préférence entre 0,1 et 5 % d'un agent épaississant ; et
- c) entre 5 et 50 %, de préférence entre 10 et 40 % de propylène glycol, le composé de formule (I) étant à l'état dissous dans la dite composition.

2. Compositions insecticides selon la revendication 1, caractérisée en ce que la hauteur d'une goutte desdites compositions au-dessus d'une surface plane sur laquelle elle est déposée reste supérieure à 1 mm, de préférence à 3 mm au bout d'une durée supérieure à 1 jour, de préférence supérieure à 2 jours, à température ambiente.

3. Compositions insecticides selon l'une des revendications 1 ou 2, caractérisée en ce que l'agent épaississant est choisi parmi un hétéropolysaccharide, un sel de polyacrylate, notamment le sel d'ammonium, un copolymère de vinylpyrrolidone et d'acétate de vinyle, un polyglycol, tel que le polyéthylène glycol, l'amidon ou encore la gomme arabique.

4. Compositions insecticides selon l'une des revendications 1 à 3, caractérisée en ce qu'elles comprennent également de 30 à 70 %, de préférence de 40 à 60% de sucres.

5. Compositions insecticides selon la revendication 4, caractérisée en ce que les sucres sont choisis parmi les mono, oligo ou polyorganosaccharides, de préférence parmi le saccharose, le lactose, le fructose, le dextrose, le glucose ou encore la mélasse ou le miel.

6. Compositions insecticides selon l'une des revendications 1 à 5, caractérisée en ce que le composé de formule (I) est le 5-amino-3-cyano-1-[2,6-dichloro-4-(trifluoromethyl)phenyl]-4-[(trifluoromethyl)sulfinyl]-1*H*-pyrazole.

7. Compositions insecticides selon l'une des revendications 1 à 6, caractérisée en ce qu'elles comprennent également un agent conservateur prévenant la dégradation du sucre et/ ou de l'agent épaississant choisi parmi le benzoate de sodium, la 1,2-benzisothiazoline-3-one, l'acide benzoïque, l'acide para hydroxybenzoïque et ses dérivés esters et sels alcalins ou alcalino-terreux, notamment le sel de sodium, le 2-phénylphénol et ses sels alcalins ou alcalino-terreux, notamment le sel de sodium.

8. Compositions insecticides selon l'une des revendications 1 à 7, caractérisée en ce qu'elles comprennent également un agent attractif choisi notamment parmi un arôme d'origine animale ou végétale ou le glutamate de sodium.

9. Compositions insecticides selon l'une des revendications 1 à 8, caractérisée en ce qu'elles présentent un viscosité comprise entre 30 et 10000 cP, de préférence entre 60 et 1000 cP, à température ambiante.

10. Procédé de lutte contre les insectes, caractérisé en ce que l'on applique sur une zone où ils sont susceptibles de se trouver une quantité efficace de composition selon l'une des revendications 1 à 9.

11. Procédé de lutte selon la revendication 10, caractérisé en ce que la quantité efficace correspond à une dose de composé de formule (I) égale à la dose nécessaire à la destruction d'au moins 90 % des insectes en un temps compris entre 2 et 15 jours, de préférence entre 2 et 4 jours.

12. Procédé de lutte selon l'une des revendications 10 ou 11, caractérisé en ce que les insectes sont des fourmis.

13. Procédé de lutte selon la revendication 12, caractérisé en ce que la quantité efficace de composition mise en oeuvre correspond à une dose de composé de formule (I) comprise entre 5 mg et 5 g pour 100 m², de préférence entre 10 mg et 2 g pour 100 m².

14. Procédé de lutte selon l'une des revendications 11 à 13, caractérisé en ce que la composition est appliquée sous forme de gouttes.

15. Procédé de lutte selon l'une des revendications 11 à 14, caractérisé en ce que la composition est placée à l'intérieur d'une boîte porte-appât close et comportant des ouvertures adaptées, en raison de leur taille, à l'usage exclusif des fourmis.

## Patentansprüche

1. Insektizide Zusammensetzungen, die enthalten:
a) 0,001 bis 5 %, vorzugsweise 0,05 bis 0,5 % einer Verbindung der Formel (I): 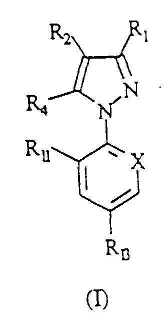 in der bedeuten:
- R₁ ein Halogenatom, Cyano oder Methyl,
- R₂ die Gruppe S(O)ₙR₃,
- R₃ Alkyl oder Halogenalkyl,
- R₄ ein Wasserstoffatom, Halogenatom, eine Gruppe -NR₅R₆, S(O)ₘR₇, C(O)R₇ oder C(O)O-R₇, Alkyl, Halogenalkyl oder OR₈ oder eine Gruppe -N=C(R₉)(R₁₀),
- R₅ und R₆ unabhängig ein Wasserstoffatom, Alkyl, Halogenalkyl, -C(O)-Alkyl oder S(O)ᵣCF₃ oder R₅ und R₆ zusammen einen zweiwertigen Alkylenrest, der durch ein oder zwei zweiwertige Heteroatome, wie Sauerstoff oder Schwefel, unterbrochen sein kann,
- R₇ Alkyl oder Halogenalkyl,
- R₈ Alkyl, Halogenalkyl oder ein Wasserstoffatom,
- R₉ Alkyl oder ein Wasserstoffatom,
- R₁₀ eine Phenyl- oder Heteroarylgruppe, die gegebenenfalls mit einem oder mehreren Halogenatomen oder sonstige Gruppen, wie -OH, -O-Alkyl, -S-Alkyl, Cyano oder Alkyl, substituiert ist,
- R₁₁ und R₁₂ unabhängig ein Wasserstoffatom oder ein Halogenatom,
- R₁₃ ein Halogenatom, eine Halogenalkyl-, Halogenalkoxygruppe, eine Gruppe S(O)_{q}CF₃ oder SF₅,
- m, n, q, r unabhängig die ganze Zahl 0, 1 oder 2,
- X ein dreiwertiges Stickstoffatom oder eine Gruppe C-R₁₂, wobei die drei übrigen chemischen Bindungen des Kohlenstoffatoms Teil des aromatischen Rings sind, mit der Maßgabe, daß R₃ Halogenalkyl, R₄ -NH₂, R₁ Chlor, R₁₃ -CF₃ und X Stickstoff bedeutet, wenn R₁ Methyl bedeutet,
b) 0,05 bis 10 % und vorzugsweise 0,1 bis 5 % eines Verdickungsmittels und
c) 5 bis 50 % und vorzugsweise 10 bis 40 % Propylenglykol, wobei die Verbindung der Formel (I) in der Zusammensetzung gelöst ist.

2. Insektizide Zusammensetzungen nach Anspruch 1, dadurch gekennzeichnet, daß die Höhe eines Tropfens der obigen Zusammensetzungen auf einer ebenen Fläche, auf die der Tropfen aufgebracht ist, bei Umgebungstemperatur und nach einem Zeitraum von mehr als 1 Tag, vorzugsweise mehr als 2 Tagen, größer als 1 mm und vorzugsweise größer als 3 mm ist.

3. Insektizide Zusammensetzungen nach einem der Ansprüche 1 und 2, dadurch gekennzeichnet, daß das Verdickungsmittel unter Heteropolysacchariden, Polyacrylat-Salzen, insbesondere den Ammoniumsalzen, Vinylpyrrolidon-Vinylacetat-Copolymeren, Polyglykolen, wie Polyethylenglykolen, Stärke und Gummi arabicum ausgewählt ist.

4. Insektizide Zusammensetzungen nach einem der Ansprüche 1 bis 3, dadurch gekennzeichnet, daß sie außerdem 30 bis 70 %, vorzugsweise 40 bis 60 %, eines oder mehrerer Zucker enthalten.

5. Insektizide Zusammensetzungen nach Anspruch 4, dadurch gekennzeichnet, daß die Zucker unter Mono-, Oligo- und Polyorganosacchariden, vorzugsweise unter Saccharose, Lactose, Fructose, Dextrose, Glucose, Melasse und Honig, ausgewählt sind.

6. Insektizide Zusammensetzungen nach einem der Ansprüche 1 bis 5, dadurch gekennzeichnet, daß es sich bei der Verbindung der Formel (I) um 5-Amino-3-cyano-1-[2,6-dichlor-4-(trifluormethyl)-phenyl]-4-[(trifluormethyl)-sulfinyl]-1*H*-pyrazol handelt.

7. Insektizide Zusammensetzungen nach einem der Ansprüche 1 bis 6, dadurch gekennzeichnet, daß sie außerdem ein Konservierungsmittel enthalten, das dem Abbau des Zuckers und/oder des Verdickungsmittels vorbeugt, das unter Natriumbenzoat, 1,2-Benzisothiazolin-3-on, Benzoesäure, p-Hydroxybenzoesäure und ihren Esterderivaten und Alkalisalzen und Erdalkalisalzen, insbesondere dem Natriumsalz, 2-Phenylphenol und seinen Alkalisalzen und Erdalkalkalisalzen, insbesondere dem Natriumsalz, ausgewählt ist.

8. Insektizide Zusammensetzungen nach einem der Ansprüche 1 bis 7, dadurch gekennzeichnet, daß sie außerdem ein Insektenlockstoff enthalten, der insbesondere unter Aromen tierischen oder pflanzlischen Ursprungs und Natriumglutamat ausgewählt ist.

9. Insektizide Zusammensetzungen nach einem der Ansprüche 1 bis 8, dadurch gekennzeichnet, daß sie bei Umgebungstemperatur eine Viskosität von 30 bis 10000 cP, vorzugsweise 60 bis 1000 cP, aufweisen.

10. Verfahren zur Insektenbekämpfung, dadurch gekennzeichnet, daß in den Bereichen, in denen sich die Insekten möglicherweise befinden können, eine wirksame Menge einer Zusammensetzung nach einem der Ansprüche 1 bis 9 aufgetragen wird.

11. Verfahren zur Insektenbekämpfung nach Anspruch 10, dadurch gekennzeichnet, daß die wirksame Menge einer Dosis der Verbindung der Formel (I) entspricht, die so groß ist wie die Dosis, die zur Vernichtung von mindestens 90 % der Insekten während eines Zeitraums von 2 bis 15 Tagen, vorzugsweise 2 bis 4 Tagen, erforderlich ist.

12. Verfahren zur Insektenbekämpfung nach Anspruch 10 oder 11, dadurch gekennzeichnet, daß es sich bei den Insekten um Ameisen handelt.

13. Verfahren zur Insektenbekämpfung nach Anspruch 12, dadurch gekennzeichnet, daß die wirksame Menge der eingesetzten Zusammensetzung einer Dosis der Verbindung der Formel (I) entspricht, die im Bereich von 5 mg bis 5 g pro 100 m² , vorzugsweise 10 mg bis 2 g pro 100 m², liegt.

14. Verfahren zur Insektenbekämpfung nach einem der Ansprüche 11 bis 13, dadurch gekennzeichent, daß die Zusammensetzung in Form von Tropfen angewendet wird.

15. Verfahren zur Insektenbekämpfung nach einem der Ansprüche 11 bis 14, dadurch gekennzeichnet, daß die Zusammensetzung in das Innere einer geschlossenen Insektenfalle eingebracht wird, die Öffnungen aufweist, deren Größe so angepaßt ist, daß ausschließlich Ameisen in die Insektenfalle gelangen können.

## Claims

1. Insecticidal compositions comprising:
- a) between 0.001 and 5 %, preferably between 0.05 and 0.5 %, of a compound of formula (I): 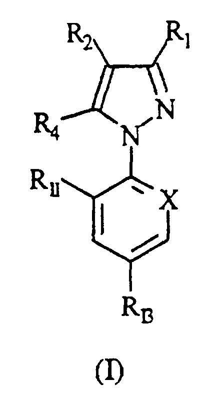 in which:
R₁ is a halogen atom or a CN or methyl group;
R₂ is S(O)ₙR₃;
R₃ is alkyl or haloalkyl;
R₄ represents a hydrogen or halogen atom; or a radical NR₅R₆, S(O)ₘR₇, C (O) R₇ or C(O)O-R₇, alkyl, haloalkyl or OR₈ or a radical -N=C (R₉) (R₁₀);
R₅ and R₆ independently represent a hydrogen atom or an alkyl, haloalkyl, C(O)alkyl or S(O)ᵣCF₃ radical; or R₅ and R₆ may together form a divalent alkylene radical which may be interrupted by one or two divalent hetero atoms, such as oxygen or sulphur;
R₇ represents an alkyl or haloalkyl radical;
R₈ represents an alkyl or haloalkyl radical or a hydrogen atom;
R₉ represents an alkyl radical or a hydrogen atom;
R₁₀ represents a phenyl or heteroaryl group optionally substituted with one or more halogen atoms or groups such as OH, -O-alkyl, -S-alkyl, cyano or alkyl;
R₁₁ and R₁₂ represent, independently of each other, a hydrogen or halogen atom;
R₁₃ represents a halogen atom or a haloalkyl, haloalkoxy, S(O)_{q}CF₃ or SF₅ group;
m, n, q and r represent, independently of each other, an integer equal to 0, 1 or 2;
X represents a trivalent nitrogen atom or a radical C-R₁₂, the other three valency positions of the carbon atom forming part of the aromatic ring;
with the proviso that when R₁ is methyl, then R₃ is haloalkyl, R₄ is NH₂, R₁₁ is Cl, R₁₃ is CF₃ and X is N;
- b) between 0.05 and 10 %, preferably between 0.1 and 5 %, of a thickener; and
- c) between 5 and 50 %, preferably between 10 and 40 %, of propylene glycol, the compound of formula (I) being in the dissolved state in the said composition.

2. Insecticidal compositions according to Claim 1, characterized in that the height of a drop of the said compositions above a flat surface on which it is deposited remains greater than 1 mm, preferably greater than 3 mm, after a period of more than 1 day, preferably of more than 2 days, at ambient temperature.

3. Insecticidal compositions according to either of Claims 1 and 2, characterized in that the thickener is chosen from a heteropolysaccharide, a polyacrylate salt, in particular the ammonium salt, a copolymer of vinylpyrrolidone and vinyl acetate, a polyglycol such as polyethylene glycol, starch or gum arabic.

4. Insecticidal compositions according to one of Claims 1 to 3, characterized in that they also comprise from 30 to 70 %, preferably from 40 to 60 %, of sugars.

5. Insecticidal compositions according to Claim 4, characterized in that the sugars are chosen from mono-, oligo- or polyorganosaccharides, especially from sucrose, lactose, fructose, dextrose or glucose, or alternatively molasses or honey.

6. Insecticidal compositions according to one of Claims 1 to 5, characterized in that the compound of formula (I) is 5-amino-3-cyano-1-[2,6-dichloro-4-(trifluoromethyl)phenyl]-4-[(trifluoromethyl)-sulphinyl]-1*H*-pyrazole.

7. Insecticidal compositions according to one of Claims 1 to 6, characterized in that they also comprise a preserving agent which prevents degradation of the sugar and/or of the thickener, chosen from sodium benzoate, 1,2-benzisothiazolin-3-one, benzoic acid, para-hydroxybenzoic acid and the ester derivatives and alkali metal or alkaline-earth metal salts thereof, in particular the sodium salt, or 2-phenylphenol and the alkali metal or alkaline-earth metal salts thereof, in particular the sodium salt.

8. Insecticidal compositions according to one of Claims 1 to 7, characterized in that they also comprise an attractant chosen in particular from a flavouring of animal or plant origin, or sodium glutamate.

9. Insecticidal compositions according to one of Claims 1 to 8, characterized in that they have a viscosity of between 30 and 10,000 cP, preferably of between 60 and 1000 cP, at ambient temperature.

10. Method for controlling insects, characterized in that an effective amount of composition accdrding to one of Claims 1 to 9 is applied to an area in which the insects are liable to be found.

11. Control method according to Claim 10, characterized in that the effective amount corresponds to a dose of compound of formula (I) equal to the dose required to destroy at least 90 % of the insects in a period of between 2 and 15 days, preferably of between 2 and 4 days.

12. Control method according to either of Claims 10 and 11, characterized in that the insects are ants.

13. Control method according to Claim 12, characterized in that the effective amount of composition used corresponds to a dose of compound of formula (I) of between 5 mg and 5 g per 100 m², preferably of between 10 mg and 2 g per 100 m².

14. Control method according to one of Claims 11 to 13, characterized in that the composition is applied in the form of drops.

15. Control method according to one of Claims 11 to 14, characterized in that the composition is placed inside a closed bait box containing openings which are tailored, on account of their size, for the exclusive use of ants.
